# EUROPÄISCHE PATENTSCHRIFT

(11) **EP 1 012 844 B1**
(45) Veröffentlichungstag und Bekanntmachung des Hinweises auf die Patenterteilung: **27.11.2002**
(21) Anmeldenummer: 98940136.9
(22) Anmeldetag: 03.07.1998
(51) Int. Cl.: G11B 33/04

(54) **VORRICHTUNG ZUR SPEICHERUNG VON SCHEIBENFÖRMIGEN TON- UND/ODER DATENTRÄGERN**
DEVICE FOR STORING DISK-SHAPED AUDIO AND/OR DATA MEDIA
DISPOSITIF DE STOCKAGE DE SUPPORTS SONORES ET/OU DE SUPPORTS DE DONNEES EN FORME DE DISQUE

(30) Priorität: 04.07.1997 DE 19728705
(43) Veröffentlichungstag der Anmeldung: 28.06.2000
(73) Patentinhaber: Variopac Swiss GmbH, 9424 Rheineck (DE)
(72) Erfinder: GLOGER, Klaus, W., J., D-32257 Bünde (DE); DIESTELHORST, Heinz-Ulrich, D-32257 Bünde (DE)
(74) Vertreter: Manitz, Finsterwald & Partner
(86) Internationale Anmeldenummer: EP9804136
(87) Internationale Veröffentlichungsnummer: WO99001869

(56) Entgegenhaltungen:
- EP-A- 0 358 780
- WO-A-93/16471
- WO-A-95/05661
- FR-A- 2 644 439
- US-A- 4 964 510

## Beschreibung

Die Erfindung betrifft eine Vorrichtung zur Speicherung von scheibenförmigen Ton- und/oder Datenträgern in Form von Disketten, insbesondere Compactdisks, wie sie in ihrem Grundaufbau aus der WO 93/16471 und der WO 95/05661 bekannt ist, gemäß dem Oberbegriff des Anspruchs 1.

Eine derartige Vorrichtung weist gegenüber den sich zur Zeit überwiegend im Gebrauch befindenden Aufnahmebehältnissen für Compactdisks sowohl in der Handhabung als auch hinsichtlich des Raumbedarfs, des Schutzes vor Beschädigungen und des Fertigungs- sowie Montageaufwands erhebliche Vorteile auf.

Aufgabe der vorliegenden Erfindung ist es, diese Speichervorrichtung weiter zu verbessern und insbesondere funktionell zu vervollkommnen, die Herstellkosten zu minimieren und die Anwendungs- und Einsatzmöglichkeiten zu erweitern.

Die Merkmale einer zur Lösung dieser Aufgabe geeigneten Vorrichtung zur Speicherung von scheibenförmigen Ton- und/oder Datenträgern in Form von Disketten, insbesondere Compactdisks, sind im Kennzeichnenden Teil des Patentanspruchs 1 angegeben.

Obwohl das alle Funktionselemente aufnehmende Flachgehäuse nur eine sehr geringe Höhe aufweist, werden die Datenspeicherflächen der Diskette optimal vor Beschädigungen geschützt, da durch die vorgesehenen Diskettenführungen sichergestellt ist, daß die zu schützenden Flächen weder in der Speicherposition noch während des Einführ- oder Entnahmevorgangs der Diskette mit dem Flachgehäuse oder Funktionselementen in Berührung kommen. Dies wird zum einen durch die konsequente randseitige Führung und Halterung der Diskette über die Funktionselemente und zum ändern dadurch erreicht, daß im Bereich der Einführungsöffnung gekrümmt verlaufende Führungsleisten vorgesehen sind, die sicherstellen, daß während derjenigen Phasen, in denen die Führungselemente die Diskette noch nicht vollständig aufgenommen haben, ausschließlich ein randseitiger Kontakt zwischen Diskette und den gekrümmt verlaufenden Leisten erfolgen kann. Dadurch sind die datentragenden Flächen der Diskette stets von allen mechanischen Bestandteilen der Vorrichtung beabstandet und bestmöglich geschützt.

Von besonderem Vorteil ist die Doppelnutzung der schlitzöffnungsseitig vorgesehenen Leistenanordnung, da von dieser Leistenanordnung neben der Führungs- und Distanzhaltungsfunktion auch eine Bremsfunktion bei der Diskettenentnahme erfüllt wird. Da der gegenseitige Abstand der einander gegenüberliegenden Leisten im Bereich der seitlichen Schlitzenden kleiner als die Materialstärke der jeweiligen Diskette ist, ergibt sich die erwünschte Bremsfunktion beim Auswurf der Diskette, und zwar derart, daß diese bremsenden Leistenbereiche wiederum im datenfreien Randbereich der Diskette angreifen und ggf. zusammen mit zusätzlichen an der Disketten-Umfangsstirnfläche angreifenden Bremselementen bewirken, daß die Diskette während des Auswurfvorgangs so abgebremst und zum Stillstand gebracht wird, daß sie zumindest mit einem Teilbereich ihres datenfreien Mittelbereichs manuell faßbar außerhalb des Öffnungsschlitzes gelegen ist und damit bequem und ohne Berührung des datentragenden Bereichs entnommen werden kann.

Eine sich durch ihre besondere Wirtschaftlichkeit in der Herstellung auszeichnende Ausführungsform der Erfindung kennzeichnet sich dadurch, daß eine der Gehäuseflachseiten an dem von der Schlitzöffnung abgewandten Ende mit einer über Filmscharniere einteilig angeschlossenen Deckfläche versehen ist, die unter Ausbildung eines Flachrückenteils über die andere Gehäuseflachseite klappbar und in Parallellage zu dieser festlegbar ist. Dabei ist die Innenseite der klappbaren Deckfläche und/oder die Außenseite der von dieser übergriffenen Gehäuseflachseite als Aufnahme für Informationsträger, insbesondere für Booklets ausgebildet, wie sie auch bei herkömmlichen CD-Verpackungen verwendet werden. Diese spritztechnisch kostengünstig zu realisierende Lösung ist grundsätzlich auch dann verwendbar, wenn Doppel- oder Mehrfachboxen realisiert werden. Solche Doppel- oder Mehrfachboxen werden bevorzugt im Hinblick auf die Erzielung einer möglichst hohen Kompaktheit derart gestaltet, daß die den Auswurfmechanismus und die Führungs-Schwenkhebel aufnehmende Gehäusewand jeweils ein Mittelteil oder ein innenliegendes Teil bildet und rückseitig als Deckelwandung für das darunterliegende Flachgehäuse genutzt wird. Um einen unbehinderten und individuellen Auswurf der einzelnen aufgenommenen Disketten zu ermöglichen, sind dabei die den Auswurfmechanismen zugeordneten Betätigungsteile abwechselnd gegeneinander versetzt und in den von der Schlitzöffnung entfernt liegenden Gehäuseeckbereichen angeordnet.

Eine für die Vielseitigkeit der Verwendbarkeit der erfindungsgemäßen Vorrichtung wesentliche Besonderheit besteht darin, daß das die Grundbox bildende Flachgehäuse an der der Schlitzöffnung gegenüberliegenden Stirnfläche mit Koppelelementen versehen ist und über diese Koppelelemente eine lösbare oder nicht zerstörungsfrei lösbare Verbindung der jeweiligen Grundbox mit komplementäre Koppelelemente aufweisenden Trägerorganen auf einfache Weise, insbesondere über Schnapp-Rastverbindungen, möglich ist. Trägerorgane können beispielsweise Klapphüllen zur Aufnahme eines oder mehrerer Flachgehäuse, Speicherracks, Displayeinheiten, Hängeregistraturen und dergleichen sein.

Weitere besonders vorteilhafte Ausgestaltungen der Erfindung sind in den Unteransprüchen angegeben und werden in der nachfolgenden Beschreibung von Ausführungsbeispielen unter Bezugnahme auf die Zeichnung erläutert; in der Zeichnung zeigt:
- Figur 1: eine schematische perspektivische Darstellung einer Flach-Grundbox im fertig montierten Zustand sowie vor der Aufbringung des Deckelteils,
- Figur 2: eine vergrößert dargestellte Teilansicht eines Eckbereichs der Grundbox im Bereich der Schlitzöffnung,
- Figur 3: eine schematische Teildarstellung einer Umfangs-Bremseinrichtung im Bereich der Schlitzöffnung der Grundbox,
- Figur 4: eine schematische, perspektivische Darstellung zur Erläuterung des Aufbaus einer Doppelbox,
- Figur 5: eine schematische Darstellung einer Grundbox mit integral angeformter Deckfläche vor der Endmontage,
- Figur 6: die Ausgestaltung nach Figur 5 im fertigen Zustand,
- Figur 7: eine schematische Darstellung zur Erläuterung der Kopplungsmöglichkeiten zwischen einer Grundbox und Trägerelementen, und
- Figur 8: eine schematische Darstellung zur Erläuterung der Kopplung einer Grundbox mit einer buchdeckelartigen Außenverpackung.

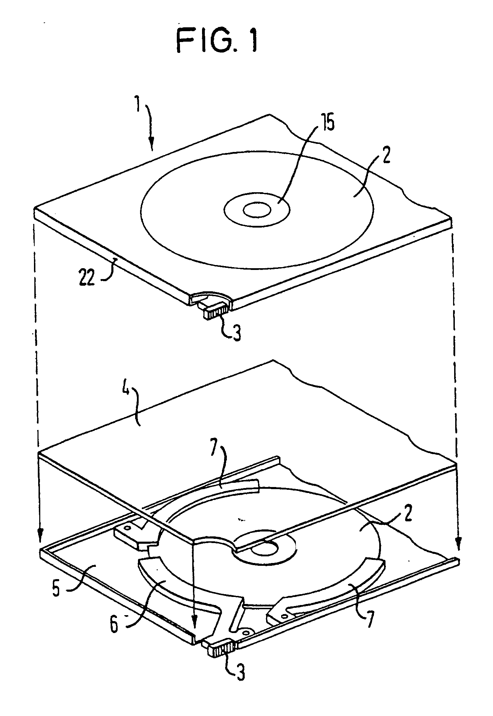

Figur 1 zeigt im oberen Teil ein fertig montiertes Flachgehäuse 1 bzw. eine Grundbox zur Aufnahme einer Diskette 2, die auf einer Seite oder auf beiden Seiten jeweils einen großflächigen Datenträgerbereich und datenfreie Randbereiche sowie einen datenfreien Mittelbereich 15 aufweist. In einem Eckbereich der Grundbox 1 befindet sich ein Betätigungsteil 3, das im Detail zu sehen ist in der Darstellung der noch nicht fertig montierten Grundbox. Diese Darstellung läßt erkennen, daß die Grundbox 1 eine untere Gehäusewand 5 und eine obere Gehäusewand 4 umfaßt, zwischen denen nach erfolgter Verbindung dieser beiden Wände 4, 5 ein Aufnahmeraum für die Diskette 2 geschaffen wird. Die untere Gehäusewand 4 und die obere Gehäusewand 5 können prinzipiell in beliebiger Weise miteinander verbunden werden. Bevorzugt sind Schnapp-Rastverbindungen, Steck-Schweißverbindungen oder Klebeverbindungen.
An der unteren Gehäusewand 5 sind Führungs-Schwenkhebel 7 für die Diskette 2 sowie ein Auswurfmechanismus bestehend aus einem Auswerferteil 6 und dem Betätigungsteil 3 vorgesehen. Alle diese Elemente sind in Flachbauweise ausgeführt und bestehen ebenso wie die beiden Gehäusewände 4, 5 bevorzugt aus einem wiederverwertbaren Material, insbesondere Polypropylen. Das Betätigungsteil 3 ist an der unteren Gehäusewand 5 schwenkbar gelagert und einteilig mit dem teilkreisförmigen Auswerferteil 6 ausgebildet, das der Diskette 2 zugewandt vorzugsweise eine Aufnahmenut für den datenfreien Diskettenrand besitzt. Diese im Querschnitt U-förmige Aufnahmenut kann nach außen sich leicht erweiternd ausgebildet sein, um die sichere Aufnahme der Diskette 2 in der Nut zu fördern.
Durch Drücken des Betätigungsteils 3, das stets innerhalb der Umrißlinie des Flachgehäuses 1 gelegen ist, wird der Auswurfvorgang der Diskette 2 bewirkt, und wenn eine Diskette 2 in das Flachgehäuse 1 eingeführt wird, erfolgt zwangsläufig ein Zurückschwenken des Auswerferteils 6 in die in Figur 1 gezeigte Stellung, in der es auch an einem entsprechenden Anschlag des Flachgehäuses zur Anlage kommt.

Die seitlichen Führungs-Schwenkhebel 7 sind vorzugsweise über eine Steckachse bezüglich der unteren Gehäusewand 5 gehalten und über das schwenklagerseitige Ende so an der unteren Gehäusewand 5 abgestützt, daß sie zumindest im wesentlichen nicht in Richtung der Gehäusemitte verschwenkt werden können. Diese Führungs-Schwenkhebel 7 bestehen aus einem flexiblen Material und weisen Führungsnuten für die Diskette 2 auf, so daß die Schwenkhebel 7 bei eingeführter Diskette 2 den datenfreien Rand der Diskette übergreifen. Die freien Enden dieser Schwenkhebel 7 sind bevorzugt etwas erweitert, d.h. trichterförmig ausgestaltet, um sicherzustellen, daß die Diskette 2 beim Einführgang auch dann in die entsprechenden Führungsnuten der Schwenkhebel 7 gelangt, wenn die Diskette 2 nicht ganz parallel zur Flachgehäuseebene in den Führungsschlitz gesteckt wird.

Die Länge der Führungs-Schwenkhebel 7 wird so gewählt, daß die jeweilige Diskette 2 einerseits zu einem frühestmöglichen Zeitpunkt beim Einführvorgang in die Führungsnuten der Schwenkhebel 7 gelangt und andererseits ein automatischer Einzugseffekt erhalten wird, der daraus resultiert, daß aufgrund der elastischen Rückstellkraft der beim Disketten-Einführvorgang zunächst in die Strecklage gebrachten Schwenkhebel die Diskette ab einem bestimmten Einschubgrad praktisch zwangsläufig in das Gehäuse gezogen und damit in die optimal geschützte Position gebracht wird.

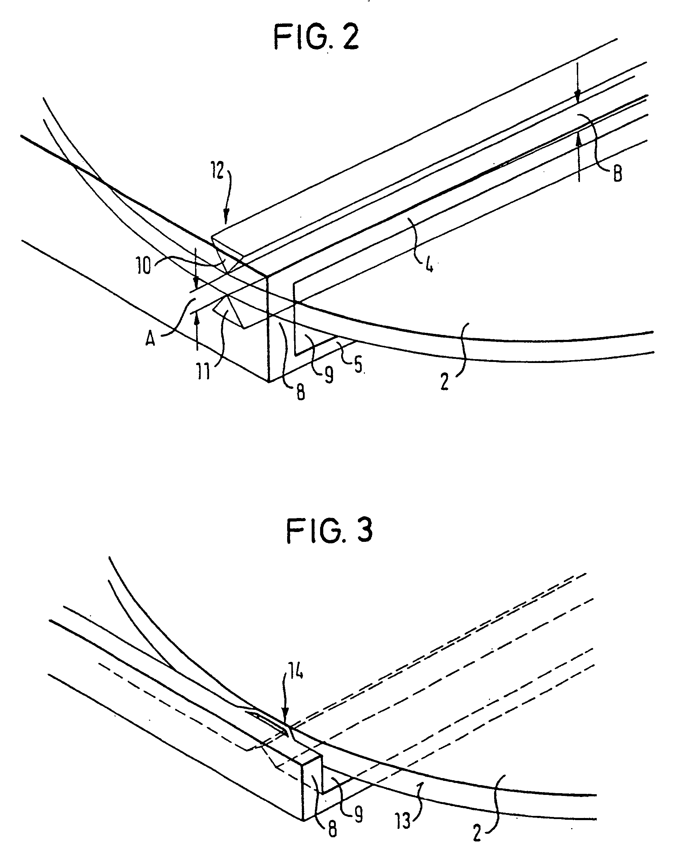

Figur 2 zeigt einen schlitzöffnungsseitigen Eckbereich der Grundbox 1, d.h. jeweils einen Teil der unteren Gehäusewand 5 und der oberen Gehäusewand 4 zwischen denen die im Regelfall von entsprechenden Ansätzen der oberen und der unteren Gehäusewand gebildete seitliche Gehäusewand 8 sich erstreckt, wodurch die Schlitzöffnung 9 zur Aufnahme der Diskette 2 festgelegt wird.

Mit geringem Abstand zur Schlitzöffnung 9 erstrecken sich über die gesamte Schlitzöffnungsbreite jeweils eine obere Leiste 10 und eine untere Leiste 11, die im Querschnitt dreieckförmig gestaltet sind und deren Spitzen sich gegenüberliegen. Durch diese Leisten 10, 11 wird der seitlichen Gehäusewand 8 benachbart ein Bremsbereich 12 geschaffen, da in diesem Bereich der gegenseitige Abstand der Leisten 10, 11 etwas geringer ist als die Stärke der Diskette 2. Zur Mitte der Schlitzöffnung 9 hin nimmt der Abstand zwischen den Leisten 10, 11 auf einen Wert zu, der größer ist als die Stärke der Diskette 2, und zur gegenüberliegenden seitlichen Gehäusewand nimmt dieser Abstand wieder analog ab.

Durch diese Gestaltung wird neben der Schaffung seitlicher Bremsbereiche 12 vor allem erreicht, daß die Diskette 2 bereits mit Beginn der Einführung in den Öffnungsschlitz 9 stets an ihren datenfreien Rändern geführt wird und damit jeglicher Kontakt datentragender Bereiche mit irgendwelchen Bestandteilen der Grundbox ausgeschlossen wird.
Das Maß B wird daher so gewählt, daß es nur geringfügig größer als die Materialstärke der Diskette 2 ist, und dieses Maß verringert sich zu den seitlichen Gehäusewänden 8 hin kontinuierlich derart, daß erst im Bremsbereich 12 bezüglich der Diskette 2 ein Untermaß A erreicht wird.

Figur 3 zeigt eines von beidseitig im Bereich der Schlitzöffnung 9 vorgesehenen Bremselemente 4, die in Form eines elastischen, vorzugsweise mit der seitlichen Gehäusewand 8 einteilig ausgebildeten Federelements vorliegen und die auf die Umfangs-Stirnfläche 13 der Diskette 2 einwirken.

Derartige Umfangs-Bremselemente 14 können entweder alleine oder vorzugsweise in Kombination mit den im Zusammenhang mit Figur 2 erläuterten Bremsbereichen vorgesehen sein.

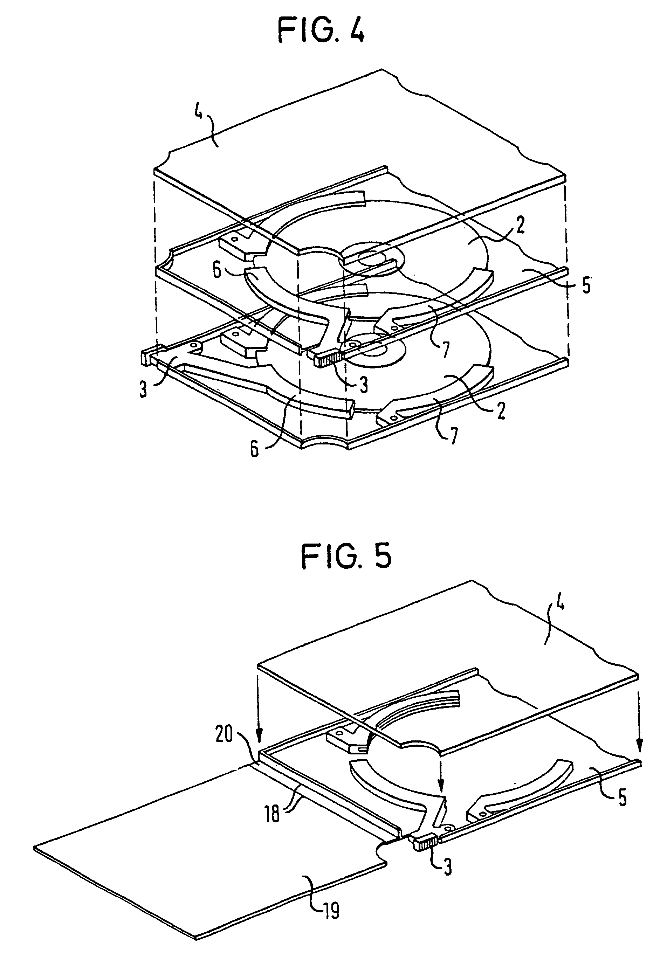

Figur 4 zeigt den grundsätzlichen Aufbau einer Doppel- oder Mehrfachboxanordnung. Das Grundprinzip des bereits anhand der Figur 1 erläuterten Aufbaus bleibt dabei unverändert, aber durch die besondere Gestaltung des jeweils von einer unteren Gehäusewand 5 gebildeten Mittel- oder innenliegenden Teils wird ein besonders kompakter, schmaler Aufbau realisiert und hohe Wirtschaftlichkeit durch Doppelnutzung dieser Gehäusewand 5 erreicht.

Dazu ist diese den Aufwurfmechanismus 3, 6 und die Führungs-Schwenkhebel 7 aufweisende Gehäusewand 5 rückseitig als Deckelwandung für das jeweils darunterliegende Flachgehäuse ausgebildet, und die den Auswurfmechanismen zugeordneten Betätigungsteile 3 sind abwechselnd gegeneinander versetzt in den von der Schlitzöffnung 9 entfernt liegenden Gehäuseeckbereichen angeordnet. Damit sind sowohl bei einer Doppel- als auch bei einer Mehrfachbox die Betätigungsteile 3 individuell und gegenseitig unbehindert voneinander betätigbar.

Figur 5 zeigt eine im Hinblick auf die Einfachheit des Gesamtaufbaus und auf eine wirtschaftliche Fertigung besonders wichtige Ausführungsvariante, die sowohl für eine Einzelbox als auch für eine Doppel- oder Mehrfachbox geeignet ist.

Gemäß dieser Ausführungsvariante ist eine der Gehäuseflachseiten, insbesondere die untere Gehäuseflachseite 5 an dem von der Schlitzöffnung 9 abgewandten Ende mit einer über Filmscharniere 18 einteilig angeschlossenen Deckfläche 19 versehen, so daß über das durch zwei Filmscharniere 18 definierte Flachrückenteil 20 eine buchdeckelartige Anordnung erhalten wird, die aufgrund der einteiligen Ausgestaltung von unterer Gehäusewand 5 und Deckfläche 19 kostengünstig zu realisieren ist und über die Deckfläche 19 und das Flachrückenteil die Möglichkeit eröffnet, eine herkömmlichen Disketten-Aufnahmebehältern mit über Scharnierverbindungen angelenktem Klappdeckel entsprechende Struktur zu schaffen, welche es auf einfache Weise ermöglicht, Aufnahmebereiche für Wort-Bilddarstellungen auf Einlegeblättern oder Einlegekartons sowie für Informationsbroschüren, insbesondere in Bookletform zu schaffen.

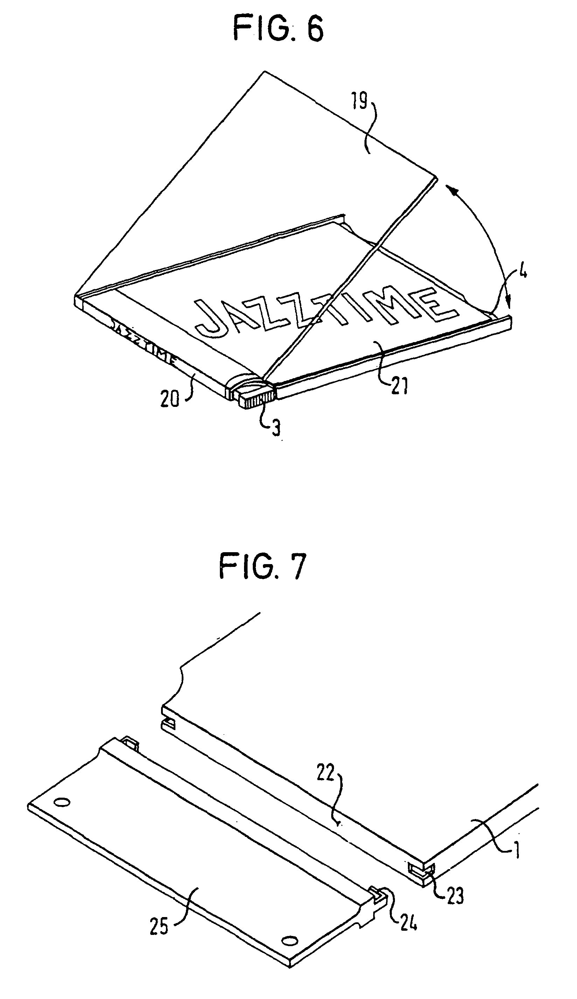

Figur 6 zeigt die Anordnung nach Figur 5 in fertig montierter Form, wobei ersichtlich ist, daß durch entsprechende Ausschnitte in der unteren Gehäuswand 5 und in der Deckfläche 9 die erforderliche Bewegungsfreiheit für das Betätigungsteil 3 geschaffen ist und das Flachrückenteil 20 durch Einlage entsprechender bedruckter Blätter als Informations-Sichtseite genutzt werden kann, während die Oberseite des Deckelteils 4 oder die innenliegende Seite der Deckfläche 9 als Aufnahmebereich für eine Informationsbroschüre bzw. ein Booklet 21 ausgebildet sein kann. Zwischen der Deckfläche 9 und der oberen Gehäusewand 4 können einfache, auch leicht lösbare Fixiermittel vorgesehen sein, um ein Schwenköffnen der Deckfläche 19 zu ermöglichen, und damit Zugriff zu der jeweiligen Informationsbroschüre 21 zu schaffen. Wichtig ist aber, daß im Vergleich zu herkömmlichen CD-Verpackungen keinerlei Aufklappvorgänge erforderlich sind, wenn die CD aus der Grundbox entnommen oder in die Grundbox eingeführt werden soll.

Figur 7 zeigt eine praktisch bedeutsame Möglichkeit der Kopplung einer Grundbox 21 mit einem Trägerorgan 25.

Dazu ist die Stirnfläche 22 der Grundbox 1 mit Koppelelementen, insbesondere Ausnehmungen 23 versehen, die bereits bei der Fertigung vorgesehen werden und die über komplementäre Gegenkopplungselemente 24 eine stabile, lösbare oder zerstörungsfrei nicht lösbare Verbindung mit einem Trägerorgan 25 gestatten. Als Trägerorgan 25 kommen unterschiedlichste Gestaltungen in Betracht, gezeigt ist in Figur 7 eine heftstreifenförmige Ausgestaltung, die eine Halterung in Leitzordnern oder in entsprechenden Gestängeanordnungen gestattet. Eine Ausgestaltung zur Verwendung in Hängeregistraturen ist in gleicher Weise möglich. Außerdem kann das Trägerorgan so gestaltet sein, daß eine Steck- oder Kupplungsaufnahme in Speicherracks oder Displayeinheiten möglich ist. Grundsätzlich kann durch diese Ankopplungsmöglichkeit eine Adaptierung an beliebige bekannte Systeme erfolgen.

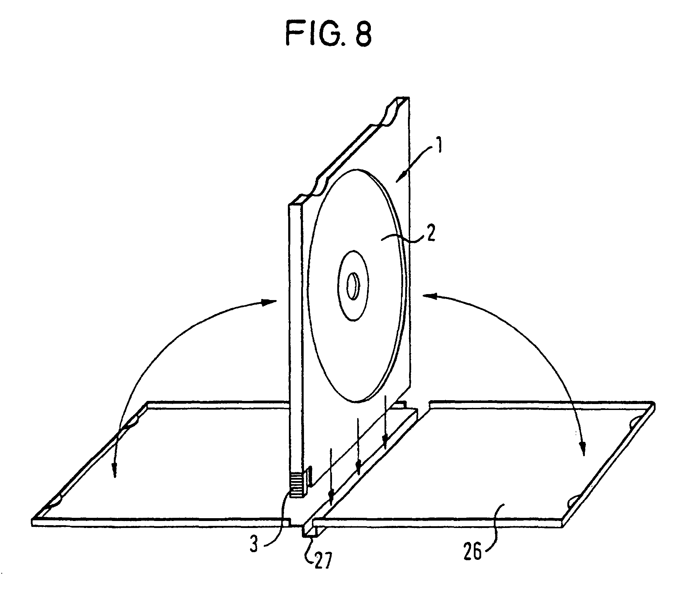

Figur 8 zeigt ein Beispiel einer Aufnahme einer Grundbox 1 im Rückenteil 27 einer buchförmigen Klappdeckelanordnung, wobei beide Klappdeckel als Beilagenaufnahme ausgebildet sein können. Die Verbindung der Grundbox 1 mit der Klappdeckelanordnung könnte zwar durch Ausbildung der Aufnahme 27 als Klemmaufnahme erfolgen, aber vorzugsweise wird auch hier das anhand der Figur 7 erläuterte Kopplungsprinzip benutzt. Die Klappdeckelanordnung läßt sich wiederum einfach und einteilig aus geeignetem Material, insbesondere Klarsichtmaterial fertigen, so daß sowohl das eine Ausnehmung zur freien Handhabung des Betätigungsteils 3 besitzende Rückenteil 27 als auch die Flächen der Klappdeckel als Displaybereich genutzt werden können und es ebenfalls möglich ist, die bei bekannten CD-Verpackungen üblichen Informationsbooklets unverändert zu nutzen.

Alle Ausführungsvarianten der Erfindung zeichnen sich durch ihre Einfachheit, Kompaktheit, problemfreie Bedienbarkeit und hohen Zusatznutzen sowohl hinsichtlich der Displaymöglichkeiten, des Disketterischutzes und umfangreicher Zusatznutzen hinsichtlich des praktischen Gebrauchs aus.

## Patentansprüche

1. Vorrichtung zur Speicherung von scheibenförmigen Ton- und/oder Datenträgern in Form von Disketten, insbesondere Compactdisks,
mit einem im wesentlichen rechteckigen Flachgehäuse (1), in dem ein über eine Schlitzöffnung (9) in einer Gehäuseschmalseite zugänglicher Aufnahmeraum ausgebildet ist,
der zumindest bereichsweise mit einander gegenüberliegenden, die jeweilige Diskette (2) randseitig aufnehmenden Führungselementen (7) versehen ist,
welche die Diskette (2) bezüglich der zur Diskettenebene parallelen Gehäuseflächen (4, 5) beabstandet halten und als zumindest im wesentlichen teilkreisförmig gestaltete, durch die Diskette (2) in Strecklage überführbare Schwenkhebel (7) aus flexiblem Material ausgebildet sind,
sowie einem rückseitig und dem Öffnungsschlitz (9) gegenüberliegend im Gehäuse (1) gelagerten Auswurfmechanismus, der eine schwenkbar gelagerte Hebelanordnung mit einem in einem Gehäuseeckbereich von außen frei zugänglichen und innerhalb des Umrisses des Flachgehäuses bewegbaren Betätigungsteil (3) und einen in den Aufnahmeraum eingreifenden Auswerferteil (6) umfaßt, wobei das Auswerferteil am Außenumfang der Diskette (2) angreift und zwischen einer ersten Stellung, in der sich die Diskette in der Speicherposition innerhalb des Aufnahmeraums befindet, und einer zweiten Stellung bewegbar ist, in der die Diskette eine Entnahmeposition einnimmt und sich zumindest mit einem Teilbereich ihres datenfreien Mittelbereichs (15) manuell faßbar außerhalb des Öffnungsschlitzes (9) befindet,
**dadurch gekennzeichnet,**
**daß** der Schlitzöffnung (9) benachbart im Flachgehäuse (1) eine Brems- und Führungsleistenanordnung (10, 11) vorgesehen ist, die sich über die Breite der Schlitzöffnung (9) erstreckt und aus zumindest zwei einander gegenüberliegenden Leisten besteht, deren gegenseitiger Abstand im Mittelbereich der Schlitzöffnung (9) ein Maximum besitzt, das größer als die Materialstärke der aufzunehmenden Diskette (2) ist und daß der gegenseitige Abstand der einander gegenüberliegenden Leisten (10, 11) zu den Schlitzenden hin abnimmt und im Bereich der Schlitzenden kleiner als die Materialstärke der aufzunehmenden Diskette (2) ist.

2. Vorrichtung nach Anspruch 1,
**dadurch gekennzeichnet,**
**daß** die sich gegenüberliegenden Leisten (10, 11) im Querschnitt zumindest im wesentlichen dreieckig ausgebildet und mit ihren Spitzen gegeneinander gerichtet sind.

3. Vorrichtung nach Anspruch 1 oder 2,
**dadurch gekennzeichnet,**
**daß** im Bereich der Schlitzöffnung (9) an den Gehäuseschmalseiten (8) federnde, insbesondere integral mit dem Gehäuse (1) ausgebildete Bremselemente (14) vorgesehen sind, die an der Umfangs-Stirnfläche (13) der jeweiligen Diskette (2) angreifen.

4. Vorrichtung nach einem der vorhergehenden Ansprüche,
**dadurch gekennzeichnet,**
**daß** die flexiblen Führungs-Schwenkhebel (7) an ihren zur Schlitzöffnung (9) hin gerichteten Enden einen erweiterten Aufnahme- und Fangabschnitt für die jeweils zuzuführende Diskette (2) aufweisen.

5. Vorrichtung nach einem der vorhergehenden Ansprüche,
**dadurch gekennzeichnet,**
**daß** die Führungs-Schwenkhebel (7) auf gehäusefesten Steckzapfen (17) gelagert und zwischen der oberen und der unteren Gehäusewand (4, 5) geführt und durch einen gehäusefesten Anschlag in ihrer Grundstellung gehalten sind.

6. Vorrichtung nach einem der vorhergehenden Ansprüche,
**dadurch gekennzeichnet,**
**daß** zur Ausbildung einer Doppel- oder Mehrfachbox die den Auswurfmechanismus (3, 6) und die Führungs-Schwenkhebel (7) aufnehmende Gehäusewand (5) jeweils ein Mittelteil oder ein innenliegendes Teil bildet und rückseitig als Deckelwandung für das darunterliegende Flachgehäuse ausgebildet ist, und daß die den Auswurfmechanismen zugeordneten Betätigungsteile (3) abwechselnd gegeneinander versetzt und in den von der Schlitzöffnung (9) entfernt liegenden Gehäuseeckbereichen angeordnet sind.

7. Vorrichtung nach einem der vorhergehenden Ansprüche,
**dadurch gekennzeichnet,**
**daß** eine der Gehäuseflachseiten (5) an dem von der Schlitzöffnung (9) abgewandten Ende mit einer insbesondere über Filmscharniere (18) einteilig angeschlossenen Deckfläche (19) versehen ist, die unter Ausbildung eines Flachrückenteils (20) über die andere Gehäuseflachseite (4) klappbar und in Parallellage zu dieser festlegbar, insbesondere in lösbarer Weise mit dieser verklemmbar- oder verrastbar ist.

8. Vorrichtung nach Anspruch 7,
**dadurch gekennzeichnet,**
**daß** die Innenseite der klappbaren Deckfläche (19) und/oder die Außenseite der von dieser übergriffenen Gehäuseflachseite (4) als Aufnahmeraum für Informationsträger, insbesondere Booklets ausgebildet ist.

9. Vorrichtung nach Anspruch 7 oder 8,
**dadurch gekennzeichnet,**
**daß** die Höhe des durch die Position der Filmscharniere (18) festgelegten Flachrückenteils (20) frei wählbar und an Doppel- oder Mehrfachboxen anpaßbar ist.

10. Vorrichtung nach einem der vorhergehenden Ansprüche,
**dadurch gekennzeichnet,**
**daß** das die Grundbox bildende Flachgehäuse (1) an der der Schlitzöffnung (9) gegenüberliegenden Stirnfläche (22) mit Koppelelementen (23), insbesondere in Form von Ausnehmungen versehen ist, und daß das Flachgehäuse (1) über diese Koppelelemente (23) mit Trägerorganen (25), Klapphüllen, Außenverpackungen, Hängeregistraturen, Speicherracks, Displayeinheiten und dergleichen verbindbar ist.

11. Vorrichtung nach Anspruch 10,
**dadurch gekennzeichnet,**
**daß** über die Koppelelemente (23) Schnapp-Rastverbindungen in lösbarer oder nicht zerstörungsfrei lösbarer Form herstellbar sind.

12. Vorrichtung nach einem der vorhergehenden Ansprüche,
**dadurch gekennzeichnet,**
**daß** der in einer Gehäuseausnehmung gelegene Bereich des Betätigungsteils (3) mit einer zur Aufnahme eines das Betätigungsteil (3) blockierenden Sperrglieds bestimmten Öffnung versehen ist.

13. Vorrichtung nach einem der vorhergehenden Ansprüche,
**dadurch gekennzeichnet,**
**daß** alle Bestandteile aus entsorgbarem und wiederverwertbarem Material, insbesondere Polypropylen, bestehen.

## Claims

1. Apparatus for the storage of disc-like sound carriers and/or data carriers in the form of discs, in particular compact discs,
comprising a substantially rectangular flat housing (1), in which there is formed a receiving space accessible via a slot opening (9) in one narrow side of the housing,
which is provided at least regionally with mutually oppositely disposed guide elements (7) which receive the respective disc (2) edge-wise,
which keep the disc (2) spaced apart relative to the housing surfaces (4, 5) parallel to the plane of the disc, and which are formed as at least substantially part circularly shaped pivotal levers (7) of flexible material, which can be transferred by the disc into extended position,
and also an ejection mechanism mounted in the housing (1) at the rear side opposite to the slot opening (9), the ejection mechanism comprising a pivotally mounted lever arrangement having an actuating part (3) which is freely accessible in a housing corner region from the outside and is movable within the outline of the flat housing, and having an ejector part (6) which engages into the receiving space, with the ejector part acting at the outer periphery of the disc (2), and being movable between a first position in which the disc is located in the storage position within the receiving space and a second position in which the disc adopts a removal position and at least a part region of its data free central region (15) is manually graspably disposed outside of the slot opening (9), **characterized in that** a braking and guide strip arrangement (10, 11) is provided in the flat housing (11) adjacent to the slot opening (9), extends over the width of the slot opening (9) and consists of at least two, mutually oppositely disposed strips, the mutual spacing of which in the center region of the slot opening (9) has a maximum which is greater than the material thickness of the disc (2) to be received, and **in that** the mutual spacing of the oppositely disposed strips (10, 11) reduces towards the ends of the slot, and is smaller in the region of the slot ends than the material thickness of the disc (2) to be received.

2. Apparatus in accordance with claim 1, **characterized in that** the oppositely disposed strips (10, 11) are at least substantially triangularly shaped in cross-section and are disposed with their apexes opposite to one another.

3. Apparatus in accordance with claim 1 or claim 2, **characterized in that** resilient brake elements (14), in particular brake elements formed integrally with the housing (1), are provided in the region of the slot opening (9) at the narrow sides (8) of the housing and act at the peripheral end face (13) of the respective disc (2).

4. Apparatus in accordance with one of the preceding claims, **characterized in that** the flexible pivotal guide levers (7) have at their ends directed towards the slot opening (9) a broadened receiving and capture section (16) for the respective disc (2) to be supplied.

5. Apparatus in accordance with one of the preceding claims, **characterized in that** the pivotal guide levers (7) are journalled on spigots (17) fixed relative to the housing, are guided between the upper and lower housing walls (4, 5) and are held in their basic position by an abutment fixed to the housing.

6. Apparatus in accordance with one of the preceding claims, **characterized in that** for the formation of a double box or of a multiple box the housing wall (5) which receives the ejection mechanism (3, 6) and the pivotal guide levers (7) respectively forms a middle part or an inwardly disposed part, and is formed at the rear side as a cover wall for the flat housing lying beneath it, and **in that** the actuating parts (3) associated with the ejection mechanisms are alternately offset relative to one another and arranged in the housing corner regions disposed remote from the slot opening (9).

7. Apparatus in accordance with one of the preceding claims, **characterized in that** one of the flat sides (5) of the housing is provided at the end remote from the slot opening (9) with a cover surface (19) attached to it in one part, in particular via film hinges (18), which can be pivoted over the other housing flat side (4) while forming a flat spine part (20) and can be fixed parallel to the other flat side (4) of the housing and is in particular clampable or latchable with the latter in releasable manner.

8. Apparatus in accordance with claim 7, **characterized in that** the inner side of the pivotal cover surface (19) and/or the outer side of the flat side (4) of the housing over which it engages is formed as a receiving space for information carriers, in particular booklets.

9. Apparatus in accordance with claim 7 or 8, **characterized in that** the height of the flat spine part (20) determined by the position of the film hinges (18) is freely selectable and adaptable to double or multiple boxes.

10. Apparatus in accordance with one of the preceding claims, **characterized in that** the flat housing (1) forming the basic box is provided at the end face (22) opposite to the slot opening (9) with coupling elements (23), in particular in the form of recesses, and **in that** the flat housing (1) can be connected via these coupling elements (23) to carrier members (25), pivotal sleeves, outer packagings, hanging depositories, storage racks, display units and the like.

11. Apparatus in accordance with claim 10, **characterized in that** snap/latch connections in releasable form, or in a form which cannot be released without destruction, can be produced via the coupling elements (23).

12. Apparatus in accordance with one of the preceding claims, **characterized in that** the region of the actuating part (3) disposed in a housing recess is provided with an opening intended to receive a blocking member which blocks the actuating part (3).

13. Apparatus in accordance with one of the preceding claims, **characterized in that** all the components consist of disposable and reusable material, in particular polypropylene.

## Revendications

1. Dispositif de stockage de supports sonores et/ou de supports de données en forme de disques, notamment de disques compacts,
comprenant un boîtier plat (1) pour l'essentiel rectangulaire, dans lequel est formé un espace de logement accessible par une fente (9) aménagée dans un chant du boîtier et
qui est pourvu, du moins dans certaines zones, d'éléments de guidage (7) disposés en vis-à-vis destinés à recevoir le disque (2) respectif au niveau de ses bords,
lesquels écartent le disque (2) par rapport aux surfaces de boîtier (4, 5) parallèles au plan du disque, et qui sont réalisés comme leviers pivotants (7) en matériau flexible en forme du moins pour l'essentiel de cercle primitif pouvant traverser le disque (2) en position allongée,
ainsi qu'un mécanisme d'éjection disposé dans le boîtier (1), opposé à la fente (9) et sur la face arrière, qui présente un ensemble de levier pivotant avec un élément d'actionnement (3) mobile dans une zone d'angle du boîtier librement accessible de l'extérieur et à l'intérieur du contour du boîtier plat, ainsi qu'un élément d'éjection (6) intervenant dans l'espace de logement, dans lequel l'élément d'éjection intervient à la périphérie extérieure du disque (2) et est mobile entre une première position, dans laquelle le disque se trouve dans la position de stockage à l'intérieur de l'espace de logement, et une deuxième position, dans laquelle le disque prend une position de déchargement et se trouve, du moins avec une zone partielle de sa zone centrale (15) libre de données, à l'extérieur de la fente (9) pour pouvoir être saisi manuellement,
**caractérisé en ce**
**qu'**un ensemble de baguettes de guidage et de freinage (10, 11) est prévu à proximité de la fente (9) dans le boîtier plat (1), qui s'étend sur la largeur de la fente (9) et qui comprend au moins deux baguettes disposées en vis-à-vis dont la distance réciproque dans la zone centrale de la fente (9) présente un maximum qui est plus grand que l'épaisseur du matériau du disque (2) à loger, et en ce que la distance réciproque des baguettes (10, 11) disposées en vis-à-vis diminue en direction des extrémités de fente et, dans la zone des extrémités de fente, est plus petite que l'épaisseur du matériau du disque (2) à loger.

2. Dispositif selon la revendication 1, **caractérisé en ce que** les baguettes (10, 11) disposées en vis-à-vis présentent une section transversale du moins pour l'essentiel triangulaire et sont orientées l'une contre l'autre au niveau de leurs pointes.

3. Dispositif selon la revendication 1 ou 2, **caractérisé en ce que** dans la zone de la fente (9) sur les chants du boîtier (8) des éléments de freinage (14) élastiques, notamment solidaires du boîtier (1), sont prévus, qui interviennent sur la face frontale de la périphérie (13) du disque (2) respectif.

4. Dispositif selon l'une des revendications précédentes, **caractérisé en ce que** les leviers pivotants de guidage flexibles (7), sur les extrémités orientées vers la fente (9), présentent une section de logement et d'arrêt élargie pour le disque (2) respectif à introduire.

5. Dispositif selon l'une des revendications précédentes **caractérisé en ce que** les leviers pivotants de guidage (7) sont logés sur des pivots d'emboîtement (17) solidaires du boîtier, guidés entre les parois de boîtier supérieure et inférieure (4, 5), et maintenus dans leur position initiale par une butée solidaire du boîtier.

6. Dispositif selon l'une des revendications précédentes, **caractérisé en ce que** pour configurer une boîte double ou multiple, la paroi de boîtier (5) recevant le mécanisme d'éjection (3, 6) et les leviers pivotants de guidage (7) forme respectivement un élément central ou un élément interne et est configurée côté arrière comme paroi de couvercle pour le boîtier plat situé en dessous, et **en ce que** les éléments d'actionnement (3) associés aux mécanismes d'éjection sont décalés en alternance les uns par rapport aux autres et disposés dans les zones d'angle du boîtier éloignées de la fente (9).

7. Dispositif selon l'une des revendications précédentes, **caractérisé en ce que** l'un des côtés plats (5) du boîtier, à l'extrémité éloignée de la fente (9), est pourvu d'une surface de couverture (19), notamment raccordée d'un seul tenant à l'aide de charnières pelliculaires (18), qui, en formant un élément dorsal plat (20), est rabattable sur l'autre côté plat du boîtier (4) et qui, en position parallèle à ce dernier, peut être immobilisée ou notamment bloquée ou encliquetée dans ce dernier de façon amovible.

8. Dispositif selon la revendication 7, **caractérisé en ce que** la face intérieure de la surface de couverture rabattable (19) et/ou la face extérieure du côté plat du boîtier (4) recouverte par celle-ci est configurée comme espace de logement pour des supports d'informations, notamment des brochures.

9. Dispositif selon la revendication 7 ou 8, **caractérisé en ce que** la hauteur de l'élément dorsal plat (20) définie par la position des charnières pelliculaires (18) peut être choisie librement et adaptée à des boîtes doubles ou multiples.

10. Dispositif selon l'une des revendications précédentes, **caractérisé en ce que** le boîtier plat (1) constituant la boîte de base, sur la face frontale (22) située en vis-à-vis de la fente (9), est pourvu d'éléments de couplage (23), notamment sous la forme d'évidements, et **en ce que** le boîtier plat (1) peut être couplé à l'aide de ces éléments de couplage (23) à des organes de support (25), des enveloppes rabattables, des emballages extérieurs, des dossiers suspendus, des racks de mémoire, des unités de visualisation et similaires.

11. Dispositif selon la revendication 10, **caractérisé en ce que** l'on peut réaliser à l'aide des éléments de couplage (23) des assemblages à encliquetage de façon amovible ou non amovible sans destruction.

12. Dispositif selon l'une des revendications précédentes, **caractérisé en ce que** la zone de l'élément d'actionnement (3) située dans un évidement du boîtier est pourvue d'une ouverture destinée au logement d'un élément d'arrêt bloquant l'élément d'actionnement (3).

13. Dispositif selon l'une des revendications précédentes, **caractérisé en ce que** tous les composants sont en matériau récupérable et recyclables, notamment en polypropylène.
